(19) Europäisches Patentamt
European Patent Office
Office européen des brevets

(11) Veröffentlichungsnummer: **0 289 744 B1**

(12) **EUROPÄISCHE PATENTSCHRIFT**

(45) Veröffentlichungstag der Patentschrift: **14.08.91**

(51) Int. Cl.⁵: **B21D 51/26**

(21) Anmeldenummer: **88103850.9**

(22) Anmeldetag: **11.03.88**

(54) **Fördereinrichtung für Dosenzargen an einer Dosenschweissmaschine.**

(30) Priorität: **07.05.87 CH 1737/87**

(43) Veröffentlichungstag der Anmeldung:
**09.11.88 Patentblatt 88/45**

(45) Bekanntmachung des Hinweises auf die
Patenterteilung:
**14.08.91 Patentblatt 91/33**

(84) Benannte Vertragsstaaten:
**BE CH DE ES FR GB GR IT LI NL SE**

(56) Entgegenhaltungen:
**EP-A- 0 215 404        CH-A- 621 499
US-A- 2 236 747        US-A- 4 050 394
US-A- 4 497 995        US-A- 4 574 176**

(73) Patentinhaber: **ELPATRONIC AG
Baarerstrasse 117
CH-6300 Zug(CH)**

(72) Erfinder: **Gysi, Peter
Rotenstein 3
CH-5454 Bellikon(CH)**

(74) Vertreter: **Hotz, Klaus, Dipl.-El.-Ing. / ETH
c/o SOUDRONIC AG Industriestrasse 35
Postfach 11
CH-8962 Bergdietikon(CH)**

## Beschreibung

Die Erfindung betrifft eine Fördereinrichtung für Dosenzargen an einer Dosenschweißmaschine mit einem Arm, um den herum die Dosenzargen gerundet werden, und mindestens einem endlosen Förderstrang, der über Umlenkvorrichtungen und ein Antriebsrad geführt ist und ein zum Arm paralleles Trum aufweist, um die Dosenzargen längs des Arms in Richtung zu einer Schweißstation hin zu fördern. Trum = freilaufender Teil eines Förderstrangs.

Bei einer bekannten Dosenschweißmaschine, die mit einer solchen Fördereinrichtung ausgestattet ist (CH-A- 621 499), ist oberhalb des Arms und parallel zu ihm ein Träger angeordnet, dessen unterer Randbereich als Z-Schiene zum Führen der Längsränder der Dosenzargen ausgebildet ist. Beiderseits des Trägers ist je ein Förderstrang angeordnet, der aus einer endlosen Laschenkette mit in Abständen voneinander angeordneten Mitnehmern besteht. Die beiden Laschenketten laufen in je einer senkrechten Ebene, die sich parallel zur gemeinsamen Mittelebene des Arms und des Trägers erstreckt. Das untere Trum jedes dieser beiden Förderstränge verläuft unmittelbar neben der Z-Schiene derart, daß die Mitnehmer der beiden Förderstränge paarweise hinter den hinteren Rand je einer Dosenzarge greifen können, unabhängig davon, ob diese einen großen oder kleinen Durchmesser hat. Diese beiden Förderstränge haben je eine hintere und eine vordere Umlenkrolle; die vorderen Umlenkrollen sind in der Nähe einer Schweißstation angeordnet, in der die Längsnähte der Dosenzargen mittels eines Paars Elektrodenrollen miteinander verschweißt werden. Im Bereich der hinteren Umlenkrollen überlappen sich die genannten Förderstränge mit einem Paar vorgeschalteter Förderstränge, die ebenfalls aus je einer Rollenkette und in Abständen angeordneten Mitnehmern bestehen und die Dosenzargen von einer Rundvorrichtung übernehmen. Diese vorgeschalteten Förderstränge sind auf einer Seite des genannten Arms in je einer schrägen, in bezug auf den Arm annähernd radialen Ebene angeordnet. Die Mitnehmer dieser beiden vorgeschalteten Förderstränge erstrecken sich soweit von der jeweils zugehörigen Förderkette weg, daß sie imstande sind, Dosenzargen unterschiedlicher Durchmesser vorzuschieben, indem sie hinter deren hinteren Rand greifen.

Bei ähnlichen Fördereinrichtungen an Dosenschweißmaschinen ist es auch bekannt (US-A- 4 497 995 und US-A- 4 574 176) Umlenk- und Spannrollen, die von einem endlosen Förderstrang in Gestalt einer mit Mitnehmern ausgerüsteten Kette umschlungen werden, an einer ortsfesten Montageplatte zu lagern, die mehrere Sätze von Löchern aufweist, damit die genannten Rollen in unterschiedlichen Abständen von einer Z-Schiene angeordnet werden können und die Lage des gesamten Förderstrangs dadurch an Dosenzargen unterschiedlichen Durchmesser angepaßt werden kann.

Bei allen bekannten Fördereinrichtungen, die der eingangs beschriebenen Gattung angehören oder mit ihr vergleichbar sind, ist der Bereich, in dem eine Anpassung an Dosenzargen unterschiedlichen Durchmessers oder unterschiedlicher Länge mit geringem Arbeitsaufwand möglich ist, verhältnismäßig eng begrenzt. Wenn Umstellungen in einem größeren Durchmesser- oder Längenbereich der Dosenzargen überhaupt möglich sind, erfordern sie einen zeitraubenden Umbau grosser Teile der Dosenschweissmaschine.

Der Erfindung liegt deshalb die Aufgabe zugrunde, eine Fördereinrichtung für Dosenzargen an einer Dosenschweissmaschine derart weiterzubilden, dass sie mit geringem Arbeitsaufwand an Dosenzargen in einem grossen Durchmesser- und Längsbereich angepasst werden können.

Die Aufgabe ist erfindungsgemäss, ausgehend von einer Fördereinrichtung der eingangs beschriebenen Gattung, dadurch gelöst, dass

- für jeden Förderstrang ein Strangträger vorhanden ist, an dem die zugehörigen Umlenkvorrichtungen gelagert sind und der zusammen mit diesen und dem Förderstrang eine insgesamt auswechselbare Einheit bildet, die jeweils einem gegebenen Längenbereich der zu fördernden Dosenzargen zugeordnet ist, und dass
- die genannte Einheit an einem Schlitten befestigt ist, der quer zur Längsachse des Armes verstellbar ist.

Dadurch wird die Möglichkeit geschaffen, eine Vielfalt von Dosenzargen unterschiedlicher Länge, die auf einer Dosenschweissmaschine geschweisst werden sollen, in mehrere Längenbereiche einzuteilen, denen je mindestens eine Einheit aus Strangträger, Förderstrang und zugehörigen Umlenkvorrichtungen zugeordnet ist. Die für unterschiedliche Zargenlängenbereiche vorgesehenen Strangträger lassen sich mit wenigen Handgriffen gegeneinander austauschen , und jeder Strangträger lässt sich mit dem zugehörigen Schlitten derart einstellen, dass seine Anordnung an Dosenzargen eines beliebigen Durchmessers innerhalb des Arbeitsbereiches der Maschine optimal angepasst ist. Es besteht auch die Möglichkeit, eine Maschine, die ursprünglich mit Strangträgereinheiten einfacher Bauweise ausgerüstet war, mit höher entwickelten Strangträgereinheiten nachzurüsten, beispielsweise mit solchen, die elektronisch gesteuerte Einzelantriebe aufweisen.

Wenn bei der erfindungsgemäßen Fördereinrichtung mindestens ein Paar endlose Förderstränge vorgesehen ist, die gemeinsam und gleichzeitig auf die Dosenzargen einwirken, dann ist es zweckmäßig, daß

- jedem Förderstrang ein eigener Strangträger sowie ein eigener Schlitten zugeordnet ist und
- die beiden Schlitten jedes Paars auf Führungen verstellbar sind, die sich auf je einer Seite einer Längsmittelebene des Arms in Richtung zu diesem hin schräg aufwärts erstrecken.

Diese sattelartige Anordnung der Führungen unterhalb des Arms verbessert die Zugänglichkeit zu den Dosenzargen, die längs des Arms gefördert werden. Die Möglichkeit, die Förderstränge mittels der Schlitten, auf denen die Strangträger befestigt sind, radial vom Arm wegzubewegen, erleichtert auch das Aufstecken und Abnehmen der Strangträger samt allen zugehörigen Bauteilen.

Es ist ferner vorteilhaft, wenn Führungselemente für die Dosenzargen einstellbar an einem der Schlitten befestigt sind. Damit wird der zusätzliche Vorteil erreicht, daß die genannten Führungselemente zusammen mit dem Schlitten, an dem sie abgestützt sind, vom Arm weg verstellbar sind, wodurch dieser rundum zugänglich wird. Deshalb können Betriebsstörungen, bei denen Dosenzargen sich auf dem Weg zur Schweißstation gestaut haben, besonders leicht und schnell behoben werden.

Vorzugsweise ist beiden Schlitten jedes Schlittenpaars für eine genaue Einstellung entsprechend dem Durchmesser der Dosenzargen ein eigener Stelltrieb zugeordnet und mindestens einem der beiden Schlitten jedes Schlittenpaars, der an einer für eine Bedienungsperson gut zugänglichen Seite der Dosenschweißmaschine angeordnet ist, ist ein unabhängig von seinem Stelltrieb betätigbarer Eilgangantrieb zum Freimachen des Arms zugeordnet. Der Eilgangantrieb trägt ebenfalls dazu bei, das Umrüsten der Maschine sowie die Behebung von Betriebsstörungen zu beschleunigen.

Es ist ferner vorteilhaft, wenn jeder Strangträger auf ein am zugehörigen Schlitten befestigtes Getriebe aufgesteckt ist, das eine mit dem Antriebsrad kuppelbare Antriebswelle aufweist.

Wenn die Förderstränge in der beschriebenen Weise paarweise angeordnet sind, ist es ferner zweckmäßig, daß die Antriebswellen an den beiden Schlitten über je eine Gelenkwelle von einem gemeinsamen Motor antreibbar sind.

Ebenso wie bei den beschriebenen bekannten Fördereinrichtungen kann bei der erfindungsgemäßen Fördereinrichtung jedem endlosen Förderstrang, der die Dosenzargen zur Schweißstation fördert, ein Förderstrang vorgeschaltet sein, der die Dosenzargen von einer Rundstation übernimmt. In diesem Fall ist es vorteilhaft, wenn jeder vorgeschaltete Förderstrang in entsprechender Weise wie der auf ihn folgende, die Dosenzargen zur Schweißstation fördernde Förderstrang Bestandteil einer auswechselbar auf einem Schlitten angeordneten, der Größe der Dosenzargen angepaßten Einheit ist.

Dabei ist es ferner vorteilhaft, wenn jedem vorgeschalteten Förderstrang ein Getriebe zugeordnet ist, das mit dem Getriebe für den auf ihn folgenden Förderstrang durch eine Gelenkwelle verbunden ist.

Ein Ausführungsbeispiel der Erfindung wird im folgenden anhand schematischer Zeichnungen mit weiteren Einzelheiten beschrieben. Es zeigt:

Fig. 1 eine perspektivische Gesamtansicht einer Dosenschweißmaschine mit einer erfindungsgemäßen Fördereinrichtung,

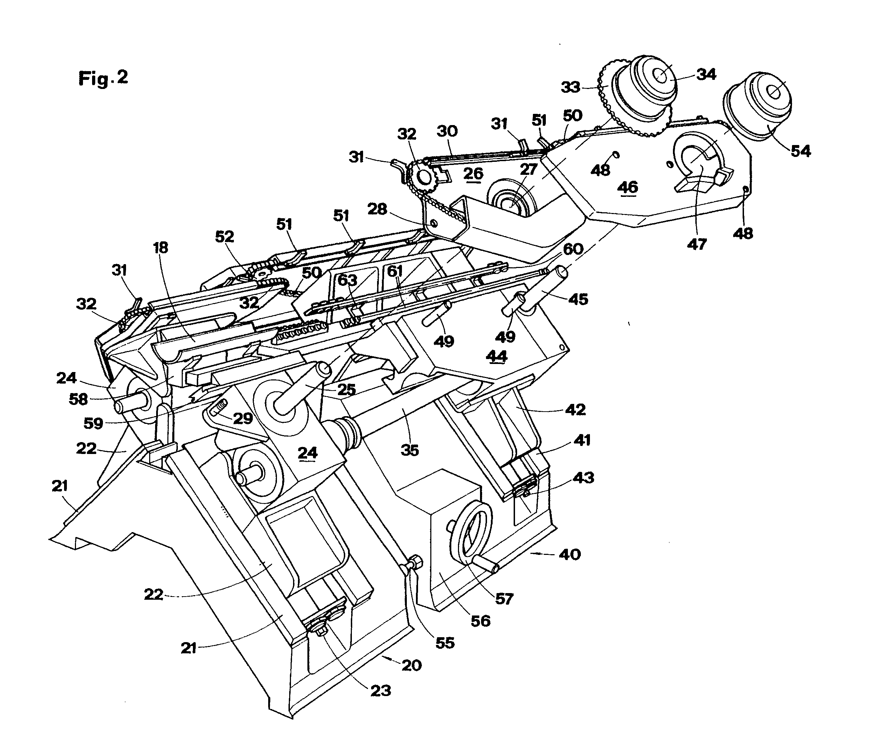

Fig. 2 eine Schrägansicht in Richtung des Pfeils II in Fig. 1 von Baugruppen der Maschine in teilweise zerlegtem Zustand,

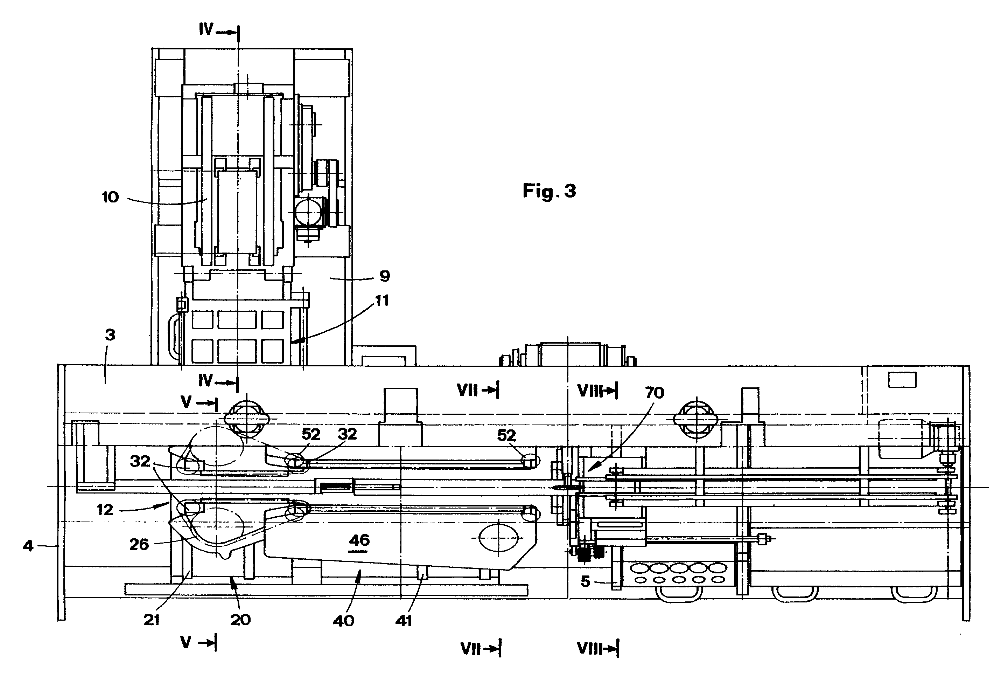

Fig. 3 die Draufsicht der Maschine,

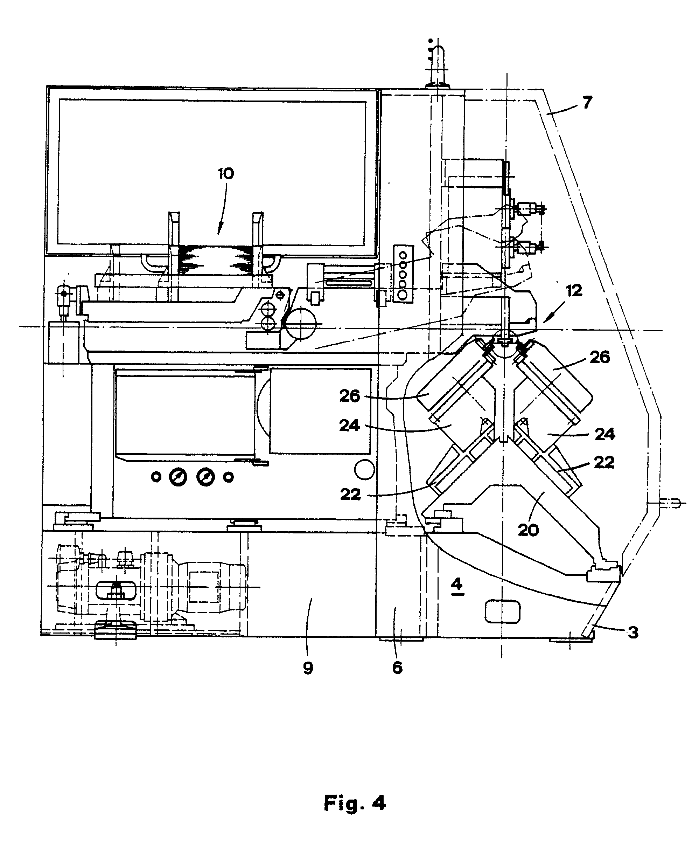

Fig. 4 die Seitenansicht in Richtung des Pfeils IV in Fig. 3,

Fig. 5a den Teilschnitt V-V in Fig. 3 in einer Einstellung und Ausrüstung der Maschine zum Schweißen großer Dosenzargen,

Fig. 5b den Teilschnitt V-V in Fig. 3 in einer Einstellung und Ausrüstung der Maschine zum Schweißen kleiner Dosenzargen,

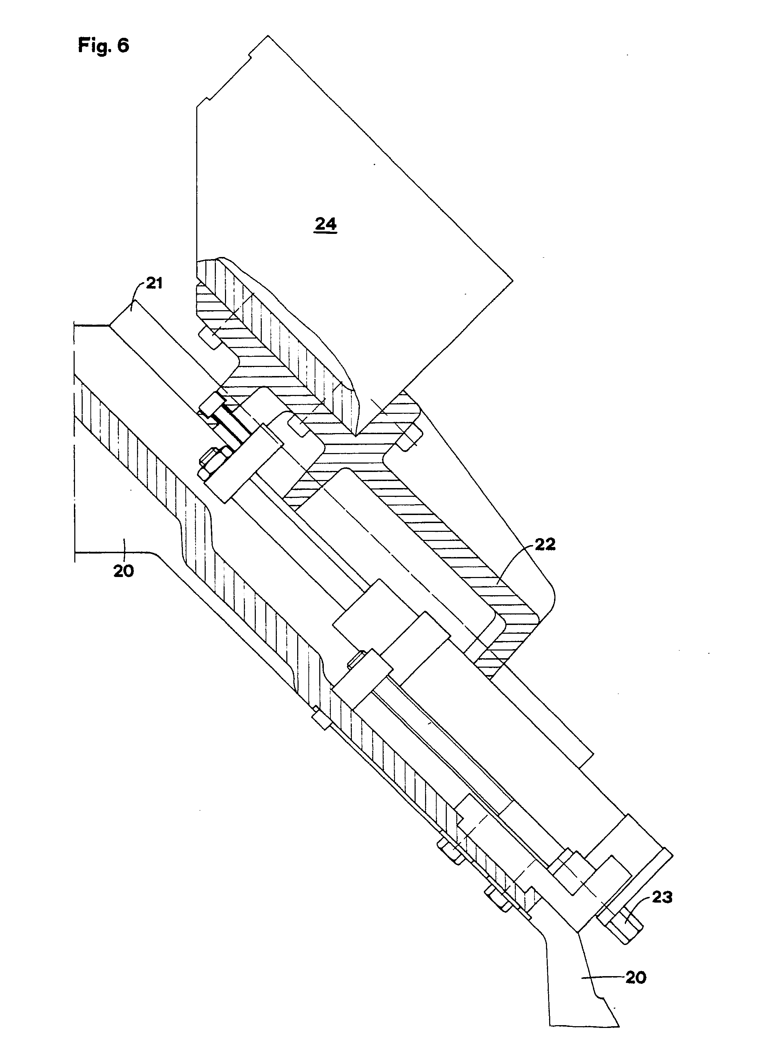

Fig. 6 eine vervollständigte Einzelheit aus Fig. 5a,

Fig. 7 den Teilschnitt VII-VII in Fig. 3, und

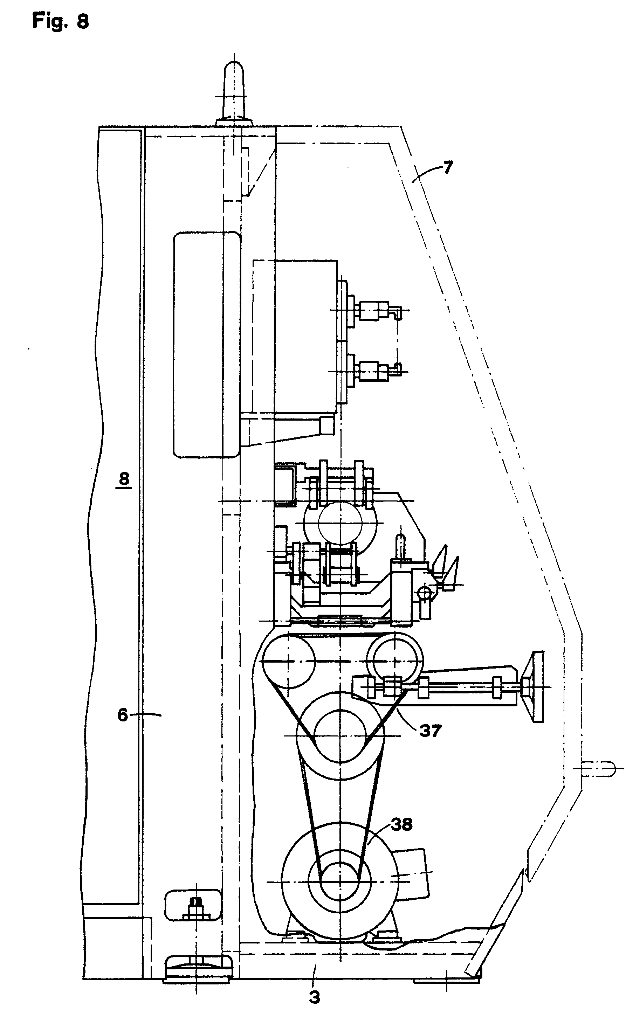

Fig. 8 den Teilschnitt VIII-VIII in Fig. 3.

Zweck der dargestellten Maschine ist es, aus ebenen, rechteckigen Blechplatinen Dosenzargen 1 zu runden und deren Längsränder 2 miteinander zu verschweißen.

Die Maschine hat ein langgestrecktes Maschinenbett 3, das an seinen Enden durch Stirnwände 4 begrenzt ist, und das durch Zwischenwände 5 unterteilt ist. Am Maschinenbett 3 ist ein in gleicher Richtung langgestreckter, portalartiger Rahmen 6 befestigt, an dem schwenkbare Abdeckungen 7 angelenkt sind. An einen Endbereich des Rahmens 6 schließt sich an dessen vom Maschinenbett 3 abgewandter Seite ein Schaltkasten 8 an. An den anderen Endbereich schließt sich auf der gleichen Seite ein Gehäuse 9 an.

Auf dem Gehäuse 9 ist ein Abstapler 10 angeordnet, der in üblicher Weise dazu bestimmt ist, ebene Blechplatinen einzeln einem Stapel zu entnehmen und zu einem Flexer 11 zu fördern, der jede einzelne Blechplatine durch mehrfaches Biegen von inneren Spannungen befreit und einer Rundstation 12 zuführt.

Am Übergang zwischen Flexer 11 und Rundstation 12 ist ein Keil 13 angeordnet, über den jede einzelne Blechplatine zwischen eine untere Walze 14 und eine obere Walze 15 einläuft. Die untere Walze 14 ist an einem Arm 16 gelagert, der mit einem seiner Enden am Rahmen 6 befestigt ist und sich von dort aus über die Rundstation 12 hinaus waagerecht längs eines großen Teils des Rahmens 6, etwa auf dessen halber Höhe, erstreckt. Die obere Walze 15 ist an einer Konsole 17 gelagert, die sich oberhalb des Arms 16 quer zu diesem erstreckt und mit einem ihrer Enden am Rahmen 6 befestigt ist.

Zur Rundstation 12 gehören ferner ein schalenartiges unteres Führungselement 18 und zwei ebenfalls schalenartige obere Führungselemente 19, die je einen ringsektorförmigen Querschnitt haben und rings um den Arm 16 derart angeordnet sind, daß jede einzelne Blechplatine von den Walzen 14 und 15 in einen Zwischenraum zwischen diesen Führungselementen und dem Arm 16 gefördert wird und dabei die gewünschte zylindrische Form einer Dosenzarge 1 annimmt.

Im folgenden wird von allem die Fördereinrichtung beschrieben, mit der die Dosenzargen 1 einzeln von der Rundstation 12 weg längs des Arms 16 weitergefördert werden.

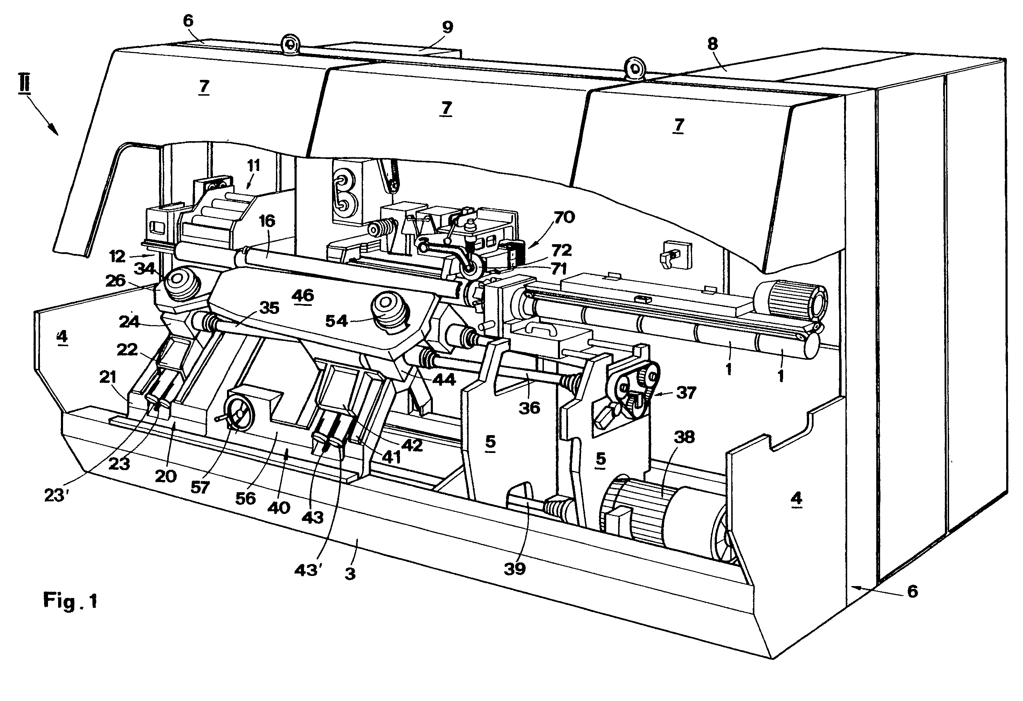

Unterhalb der Rundstation 12 wird das Maschinenbett 3 von einem Gestell 20 überbrückt, das in seiner Form einem Satteldach mit offenem First ähnlich ist. Auf dem Gestell 20 sind zwei Führungen 21 angeordnet, die sich auf je einer schrägen Seite des Gestells, im rechten Winkel zueinander, radial zum Arm 16 hin nach oben erstrecken und gegen eine waagerechte Ebene um je 45° geneigt sind. Auf jeder der Führungen 21 ist ein Schlitten 22 geführt und mittels eines Stelltriebs 23, der beispielsweise eine Gewindespindel aufweist, mit hoher Genauigkeit zur Anpassung an Dosenzargen 1 unterschiedlicher Durchmesser verstellbar. Derjenige der beiden Schlitten 22, der auf der Bedienungsseite der Maschine angeordnet, also dem Betrachter der Fig. 1 zugewandt ist, läßt sich unabhängig vom Stelltrieb 23 auch mittels eines Eilgangantriebs 23' verstellen, damit der Arm 16 rasch freigemacht werden kann, wenn beispielsweise eine Störung behoben werden muß.

Jeder der Schlitten 22 trägt ein Getriebe 24, aus dem eine Antriebswelle 25 nach oben herausragt. Die Antriebswellen 25 liegen in einer gemeinsamen senkrechten, in bezug auf den Arm 16 querliegenden Ebene und schließen mit der senkrechten Längsmittelebene des Arms 16 einen Winkel von je 45° ein.

Am Getriebe 24 jedes der beiden Schlitten 22 ist ein auswechselbarer Strangträger 26 befestigt, der eine gewisse Ähnlichkeit mit dem Kettenschwert einer Kettensäge hat. Jeder Strangträger 26 hat eine Aussparung 27 für die zugehörige Antriebswelle 25 und hat ferner ein Paar Zentrierlöcher 28, die einander in bezug auf die Aussparung 27 ungefähr diametral gegenüberliegen und je einem am Gehäuse des zugehörigen Getriebes 24 angeordneten Bolzen 29 zugeordnet sind. Jeder Strangträger 26 ist auf die zugehörigen Bolzen 29 aufgesteckt, durch diese zentriert und mit nicht dargestellten, schnell lösbaren Gewindemuttern festgehalten.

An jedem der Strangträger 26 ist ein endloser Förderstrang 30 geführt, der im dargestellten Beispiel von einer Laschenkette mit in gleichmäßigen Abständen angeordneten Mitnehmern 31 gebildet ist, aber auch beispielsweise von einem Zahnriemen gebildet sein könnte. Jeder Förderstrang 30 läuft über ein Paar Umlenkvorrichtungen 32, die im dargestellten Beispiel je ein Kettenrad aufweisen. Die Umlenkvorrichtungen 32 sind derart angeordnet, daß ein Trum jedes Förderstrangs 30 sich parallel zum Arm 16 erstreckt, und der Förderstrang insgesamt stets gleichmäßig gespannt gehalten ist. Jedem Förderstrang 30 ist ferner ein Antriebsrad 33, im dargestellten Beispiel ebenfalls ein Kettenrad, zugeordnet, das sich auf die zugehörige Antriebswelle 25 aufstecken und an dieser mittels einer schnell lösbaren Kupplung 34 befestigen läßt.

Die Antriebswellen 25 der beiden Schlitten 22 sind durch das jeweils zugehörige Getriebe 24 mit je einer Gelenkwelle 35 und über diese mit je einer weiteren Gelenkwelle 36 verbunden. Die beiden Gelenkwellen 36 gehen von einem Verzweigungsgetriebe 37 aus, das an einer der Zwischenwände 5 befestigt und von einem Motor 38 antreibbar ist.

Vom Motor 38 werden ferner über eine Gelenkwelle 39 der Flexer 11 und die Walzen 14 und 15 in der Rundstation 12 angetrieben. Diese für die Zufuhr der Blechplatinen zur Rundstation 12 verantwortlichen Förderelemente sind also mit den Fördersträngen 30 synchronisiert. Auf diese Weise ist dafür gesorgt, daß jede Dosenzarge 11, die in der Rundstation 12 um den Arm 16 herum gerundet worden ist, von zwei Mitnehmern 31 erfaßt wird, die zu je einem der beiden Förderstränge 30 gehören und die Dosenzarge längs des Arms 16 von der Rundstation 12 wegbewegen.

In einem Abstand förderstromabwärts vom Gestell 20 ist ein weiteres, gleichartiges Gestell 40 auf dem Maschinenbett 3 angeordnet. Das Gestell 40 weist ein Paar Führungen 41 auf, die den Führungen 21 entsprechen und je einen Schlitten 42 führen, der mittels eines Stelltriebs 43 in Form einer Gewindespindel mit hoher Genauigkeit zur Anpassung an Dosenzargen 1 unterschiedlicher Durchmesser verstellbar ist. Derjenige der beiden Schlitten 42, der auf der Bedienungsseite der Maschine angeordnet, also dem Betrachter der Fig. 1 zugewandt ist, läßt sich außerdem, unabhängig vom Stelltrieb 43, mittels eines Eilgangantriebs 43' vom Arm 16 weg verstellen, damit dieser rasch zugänglich gemacht werden kann, ohne daß sich an der Einstellung des Stelltriebs 43 etwas ändert. Die beiden Eilgangantriebe 23' und 43' sind stets gemeinsam und gleichsinnig betätigbar.

Jeder der beiden Schlitten 42 trägt ein Getriebe 44 mit einer Antriebswelle 45. Jedes der beiden Getriebe 44 verbindet die beiden zugehörigen Gelenkwellen 35 und 36 miteinander und mit der betreffenden Antriebswelle 45. Auf das Getriebe 44 jedes der beiden Schlitten 42 ist ein Strangträger 46 aufgesteckt, der zu diesem Zweck eine Aussparung 47 für die Antriebswelle 45 sowie ein Paar Löcher 48 für ein Paar am Getriebe 44 befestigter Bolzen 49 aufweist und leicht auswechselbar ist.

Jeder Strangträger 46 trägt einen Förderstrang 50, der wiederum von einer Laschenkette mit Mitnehmern 51 gebildet ist. Jeder der beiden Förderstränge 50 läuft über ein Paar Umlenkvorrichtungen 52 und ist von einem Antriebsrad 53 antreibbar, das sich auf die zugehörige Antriebswelle 45 aufstecken und an dieser mittels einer schnell lösbaren Kupplung 54 befestigen läßt.

Die Gestelle 20 und 40 sind in der Art von Bettschlitten längs des Maschinenbetts 3, also parallel zum Arm 16, verstellbar. Für gemeinsame Bewegungen sind die beiden Gestelle 20 und 40 miteinander durch eine längeneinstellbare Gewindestange 55 verbunden. Am Gestell 40 ist ein Zahnradgetriebe 56 angeordnet, das sich mit einem Handrad 57 antreiben läßt und mit einer am Maschinenbett 3 befestigten, nicht dargestellten Zahnstange zusammenwirkt, um die Gestelle 20 und 40 zu verstellen.

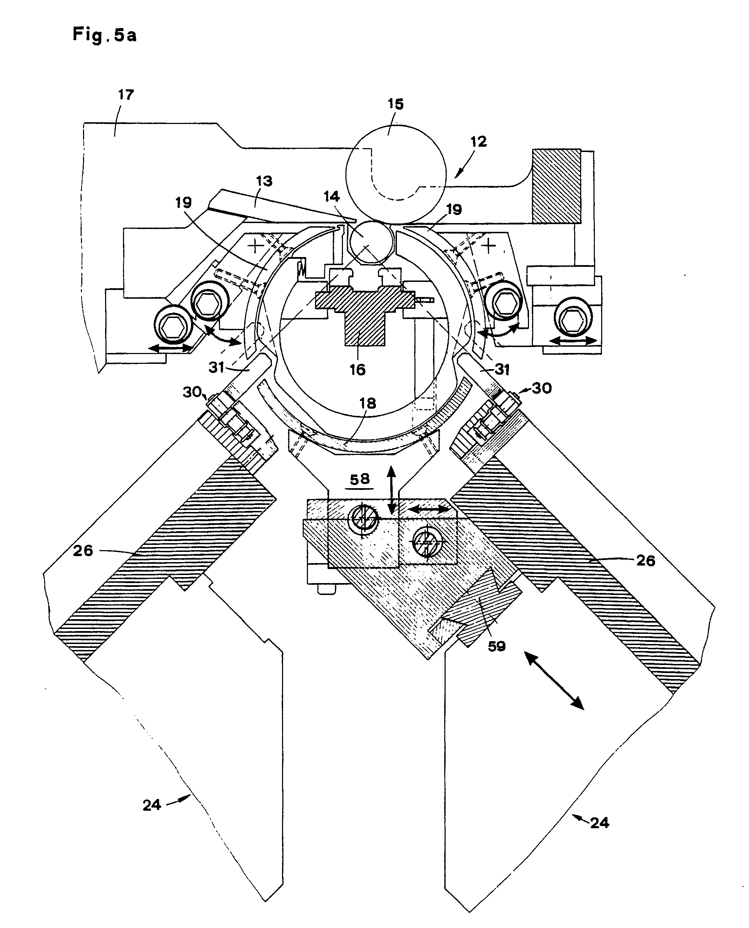

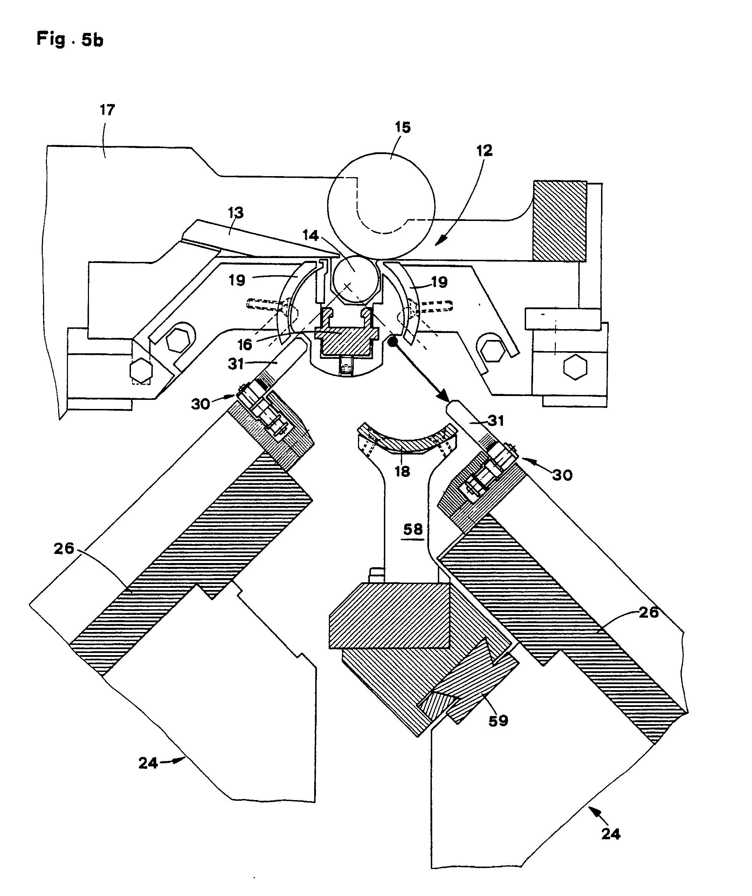

Das beschriebene untere Führungselement 18 in der Rundstation 12 ist auf einer Stütze 58 befestigt, die ihrerseits mittels einer Klemmleiste 59 einstellbar am Gehäuse des Getriebes 24 auf demjenigen der beiden Schlitten 22 befestigt ist, der auf der Bedienungsseite der Maschine angeordnet und, wie beschrieben, im Eilgang verstellbar ist. Dieser Schlitten 22 ist in Fig. 5b in einer vom Arm 16 entfernten Ruhestellung abgebildet. Dabei ist die Entfernung zwischen der Arbeitsstellung und der Ruhestellung des betreffenden Schlittens 22 mit einem Pfeil angedeutet.

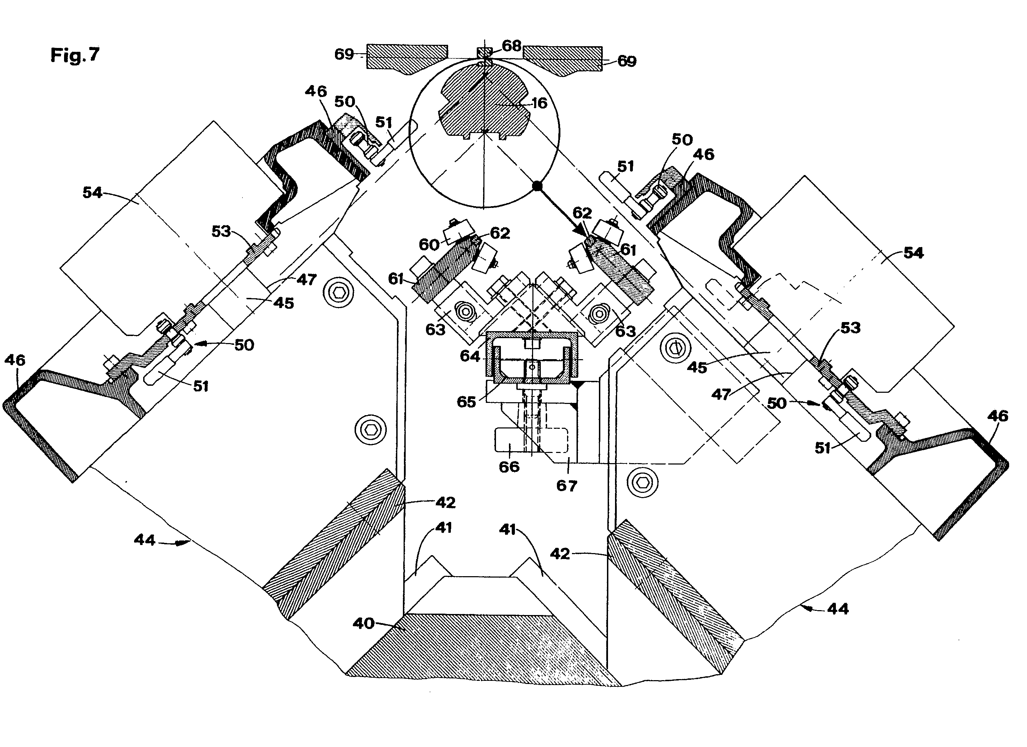

Im Bereich der Strangträger 46, also in einem Abstand förderstromabwärts von der Rundstation 12, sind gemäß Fig. 7 unterhalb des Arms 16 weitere Führungselemente 60 in Gestalt von Rollenpaaren angeordnet, die auf Rollenträgern 61 gelagert sind. An jedem Rollenträger 61 ist außerdem eine Magnetleiste 62 befestigt, die dafür sorgt, daß die Dosenzargen 1 gleichmäßig an den Führungselementen 60 anliegen. Jeder Rollenträger 61 ist über Stützen 63 an einer nach unten offenen U-Schiene 64 einstellbar befestigt, und diese ist wiederum an einer nach oben offenen U-Schiene 65 gehalten, die ihrerseits mittels eines Handgriffs 66 schnell lösbar an einer Konsole 67 festgeklemmt ist. Jede der Konsolen 67 ist am Getriebe 44 auf demjenigen der beiden Schlitten 42 befestigt, der auf der Bedienungsseite der Maschine angeordnet und, wie beschrieben, ebenfalls im Eilgang verstellbar ist. Auch dieser Schlitten 42 ist in Fig. 7 in einer vom Arm 16 entfernten Ruhestellung abgebildet. Dabei ist wiederum die Entfernung zwischen der Arbeitsstellung und der Ruhestellung des betreffenden Schlittens 42 mit einem Pfeil angedeutet.

Im Arbeitsbereich der beiden Förderstränge 50 ist auf der Oberseite des Arms 16 eine Z-Schiene 68 befestigt, die in üblicher Weise die Längsränder 2 der Dosenzargen 1 führt. Parallel zur Z-Schiene 68 und auf gleicher Höhe wie diese ist ein Paar Stromschienen 69 angeordnet, die eine Schweißstation 70 mit Strom versorgen. Die Schweißstation 70 ist von üblicher Bauart und weist vor allem ein Paar Elektrodenrollen 71 und 72 zum Verschweißen der Längsränder 2 der Dosenzargen 1 auf.

Wenn die gemäß Fig. 5a zum Herstellen großer Dosenzargen 1 ausgerüstete Maschine derart umgerüstet werden soll, daß sie sehr viel kleinere Dosenzargen herstellen kann, und wenn ein solches Umrüsten durch bloße Verstellung der Schlitten 22 und 42 nicht möglich ist, werden die ursprünglich verwendeten Strangträger 26 und 46 samt ihren Försträngen 30 bzw. 50 und Umlenkvorrichtungen 32 bzw. 52, nötigenfalls einschließlich des jeweils zugehörigen Antriebsrades 33 bzw. 53, durch entsprechend anders gestaltete Strangträger 26 bzw. 46 ersetzt. Nötigenfalls werden auch die Führungselemente 18,19 und 60 ausgewechselt.

## Patentansprüche

1. Fördereinrichtung für Dosenzargen an einer Dosenschweissmaschine mit einem Arm (16), um den herum die Dosenzargen (1) gerundet werden, und mindestens einem endlosen Förderstrang (30; 50), der über Umlenkvorrichtungen (32; 52) und ein Antriebsrad (33; 53) geführt ist und ein zum Arm (16) paralleles Trum aufweist, um die Dosenzargen (1) längs des Arms (16) in Richtung zu einer Schweissstation (70) hin zu fördern,
dadurch **gekennzeichnet**, dass
- für jeden Förderstrang (30; 50) ein Strangträger (26; 46) vorhanden ist, an dem die zugehörigen Umlenkvorrichtungen (32; 52) gelagert sind und der zusammen mit diesen und dem Förderstrang eine insgesamt auswechselbare Einheit bildet, die jeweils einem gegebenen Längenbereich der zu fördernden Dosenzargen (1) zugeordnet ist, und dass

- die genannte Einheit an einem Schlitten (22; 42) befestigt ist, der quer zur Längsachse des Armes (16) verstellbar ist.

2. Fördereinrichtung nach Anspruch 1 mit mindestens einem Paar endloser Förderstränge (50), die gemeinsam und gleichzeitig auf die Dosenzargen (1) einwirken, dadurch **gekennzeichnet**, dass

- jedem Förderstrang (30; 50) ein eigener Strangträger (26; 46) sowie ein eigener Schlitten (22; 42) zugeordnet ist und
- die beiden Schlitten (22; 42) jedes Paars auf Führungen (21; 41) verstellbar sind, die sich auf je einer Seite einer Längsmittelebene des Arms (16) in Richtung zu diesem hin schräg aufwärts erstrekken.

3. Fördereinrichtung nach Anspruch 1 oder 2, dadurch **gekennzeichnet**, daß Führungselemente (18; 60) für die Dosenzargen (1) einstellbar an einem der Schlitten (22; 42) befestigt sind.

4. Fördereinrichtung nach Anspruch 2, dadurch **gekennzeichnet**, daß beiden Schlitten (22; 42) jedes Schlittenpaars für eine genaue Einstellung entsprechend dem Durchmesser der Dosenzargen (1) ein eigener Stelltrieb (23; 43) zugeordnet ist und mindestens einem der beiden Schlitten (22; 42) jedes Schlittenpaars, der an einer für eine Bedienungsperson gut zugänglichen Seite der Dosenschweißmaschine angeordnet ist, ein unabhänig von seinem Stelltrieb (23; 43) betätigbarer Eilgangantrieb (23'; 43') zum Freimachen des Arms (16) zugeordnet ist.

5. Fördereinrichtung nach einem der Ansprüche 1 bis 4, dadurch **gekennzeichnet**, daß jeder Strangträger (26; 46) auf ein am zugehörigen Schlitten (22; 42) befestigtes Getriebe (24; 44) aufgesteckt ist, das eine mit dem Antriebsrad (33; 53) kuppelbare Antriebswelle (25; 45) aufweist.

6. Fördereinrichtung nach Anspruch 5, dadurch **gekennzeichnet**, daß die Antriebswellen (25; 45) an den Schlitten (22; 42) über je eine Gelenkwelle (35; 36) von einem gemeinsamen Motor (38) antreibbar sind.

7. Fördereinrichtung nach einem der Ansprüche 1 bis 6, bei der jedem endlosen Förderstrang (50), der die Dosenzargen (1) zur Schweißstation (70) fördert, ein Förderstrang (30) vorgeschaltet ist, der die Dosenzargen (1) von einer Rundstation (12) übernimmt, dadurch **gekennzeichnet**, daß jeder vorgeschaltete Förderstrang (30) in entsprechender Weise wie der auf ihn folgende, die Dosenzargen (1) zur Schweißstation (70) fördernde Förderstrang (50) Bestandteil einer auswechselbar auf einem Schlitten (42) angeordneten Einheit ist, die jeweils der selben Länge der zu fördernden Dosenzargen (1) zugeordnet ist.

8. Fördereinrichtung nach den Ansprüchen 6 und 7, dadurch **gekennzeichnet**, daß jedem vorgeschalteten Förderstrang (30) ein Getriebe (24) zugeordnet ist, das mit dem Getriebe (44) für den auf ihn folgenden Förderstrang (50) durch eine Gelenkwelle (35) verbunden ist.

## Claims

1. A conveyor device for can bodies on a can welding machine, having an arm (16) around which the can bodies (1) are rounded, and at least one endless conveyor track (30; 50) which is guided via guide devices (32;52) and a drive wheel (33; 53) and having a run parallel to the arm (16) to convey the can bodies (1) along the arm (16) in the direction of a welding station (70), characterised in that

- for each conveyor track (30; 50) there is provided a track carrier (26; 46), on which the associated guide devices (32; 52) are located, and which forms, together with the guide devices (32; 52) and the conveyor track, a unit which can be replaced as a whole, wherein each unit corresponds to a given region of the length of the can bodies (1) to be conveyed, and that
- the above-mentioned unit is secured to a sliding carriage (22; 42) which is adjustable transversely to the longitudinal axis of the arm (16).

2. A conveyor device according to Claim 1 having at least one pair of endless conveyor tracks (50) which act jointly and simultaneously on the can bodies (1), characterised in that

- each conveyor track has its own track carrier (26; 46) and its own sliding carriage (22; 42) associated with it, and
- the two sliding carriages (22; 42) of each pair are adjustable on guides (21; 41) which extend obliquely upwards, one at each side of the longitudinal centre plane of the arm (16) in the direction of the latter.

3. A conveyor device according to Claim 1 or 2, characterised in that the guide elements (18; 60) for the can bodies (1) are adjustably secured to one of the sliding carriages (22; 42).

4. A conveyor device according to Claim 2, characterised in that each sliding carriage (22; 42) of each pair of sliding carriages has its own adjusting drive (23; 43) associated with it for accurate adjustment corresponding to the diameter of the can body (1), and at least one of the two sliding carriages (22, 42) of each pair of sliding carriages, which is disposed at the side of the can welding machine with good access for the operator, has a rapid-motion drive (23', 43') associated with it which can be activated independently of its adjusting drive (23', 43') to expose the arm (16).

5. A conveyor device according to any one of Claims 1 to 4, characterised in that each track carrier (26; 46) is placed on a transmission unit secured to the associated sliding carriage (22; 42), where the transmission unit has a drive shaft (25; 45) which can be coupled to the drive wheel (33; 53).

6. A conveyor device according to Claim 5, characterised in that the drive shafts (25; 45) on the sliding carriages (22, 42) can each be driven by a cardan shaft (35; 36) from a common motor (38).

7. A conveyor device according to any one of Claims 1 to 6, wherein each endless conveyor track (50) which conveys the can bodies (1) to the welding station (70) is preceded by a conveyor track (30) which takes over the can bodies (1) from a rounding station (12), characterised in that each preceding conveyor track (30) is a component of a unit which is interchangeably mounted on a sliding carriage (42), where each unit corresponds to the same length of the can bodies (1) to be conveyed, in a corresponding manner to the conveying track (50) which follows it and conveys the can bodies (1) to the welding station (70).

8. A conveyor device according to Claims 6 and 7, characterised in that each preceding conveyor track (30) has a transmission unit (24) assigned to it which is connected to the transmission unit (44) for the conveyor track (50) following it by means of a cardan shaft (35).

## Revendications

1. Transporteur de corps cylindriques de boîte de conserves prévu sur une machine à souder les boîtes, du type comprenant un bras (16), autour duquel les boîtes de conserves (1) sont cintrées, et au moins un lien transporteur sans fin (30, 50) qui est guidé sur des organes de renvoi (32, 52) et sur une roue d'entraînement (33, 53) et qui comporte un brin parallèle au bras (16) afin de faire avancer les boîtes de conserves (1) le long de ce bras (16) en direction d'un poste de soudage (70), caractérisé en ce que :
   - pour chaque lien transporteur (30, 50), il est prévu un porte-lien (26, 46) sur lequel sont montés les organes de renvoi (32, 52) associés et qui constitue, avec ces derniers et le lien transporteur, une unité, pouvant être remplacée dans son ensemble, qui est chaque fois associée à un intervalle donné de valeurs des longueurs des corps de boîte (1) à faire avancer et en ce que
   - ladite unité est fixée sur un coulisseau (22, 42) dont la position peut être réglée transversalement à l'axe longitudinal du bras (16).

2. Transporteur suivant la revendication 1, comprenant au moins une paire de liens transporteurs sans fin (50) qui agissent en commun et en même temps sur les corps de boîte (1), caractérisé en ce que :
   - à chaque lien transporteur (30, 50), il est associé un porte-lien (26, 46) propre, ainsi qu'un coulisseau (22, 42) propre et en ce que
   - la position des deux coulisseaux (22, 42) de la paire est réglable sur des guides (21, 41) qui s'étendent chacun sur un côté d'un plan longitudinal médian du bras (16), en se dirigeant d'une manière inclinée vers le haut en direction de ce dernier.

3. Transporteur suivant l'une des revendications 1 et 2, caractérisé en ce que des éléments (18, 60) de guidage des corps de boîte (1) sont fixés d'une manière réglable en position sur l'un des coulisseaux (22, 42).

4. Transporteur suivant la revendication 2, caractérisé en ce qu'aux deux coulisseaux (22, 42) de chaque paire de coulisseaux, il est associé une commande de réglage (23, 43) propre en vue d'un réglage précis correspondant au diamètre des corps de boîte (1) et en ce qu'à au moins l'un des deux coulisseaux (22, 42) de chaque paire de coulisseaux, qui est associé à un côté de la machine à souder les boîtes qui est bien accessible à un opérateur, il est associé un entraînement rapide (23', 43') agencé de façon à pouvoir être actionné indépendamment de sa commande de réglage (23, 43), en vue de dégager le bras (16).

5. Transporteur suivant l'une des revendications 1 à 4, caractérisé en ce que chaque porte-lien (26, 46) est emboîté sur une boîte de transmission (24, 44), fixée sur le coulisseau associé (22, 42) et qui comporte un arbre d'entraînement (25, 45) agencé de façon à pouvoir être accouplé à la roue d'entraînement (33, 53)

6. Transporteur suivant la revendication 5, caractérisé en ce que les arbres d'entraînement (25, 45) prévus sur les coulisseaux (22, 42) sont agencés de façon à pouvoir être entraînés, chacun par l'intermédiaire d'un arbre de transmission (35, 36), à partir d'un moteur commun (38).

7. Transporteur suivant l'une des revendications 1 à 6, dans lequel, en amont de chaque lien transporteur sans fin (50) qui fait avancer les corps de boîte (1) vers le poste de soudage (70), il est monté un lien transporteur (30) qui prélève ces corps de boîte (1) à partir d'un poste de cintrage (12), caractérisé en ce que, d'une manière correspondante à celle du lien transporteur (50) qui le suit et fait avancer les corps de boîte (1) vers le poste de soudage (70), chaque lien transporteur (30) disposé en amont fait partie d'une unité, adaptée à la taille des corps de boîte, qui est disposée d'une manière interchangeable sur un coulisseau (42) qui chaque fois est associée à la même longueur des corps de boîte (1) à faire avancer.

8. Transporteur suivant l'une des revendications 6 et 7, caractérisé en ce qu'à chaque lien transporteur (30) disposé en amont, il est associé une boîte de transmission (24) qui est reliée par un arbre de transmission (35) à la boîte de transmission (44) prévue pour le lien transporteur (50) qui le suit.

Fig. 1

Fig. 2

Fig. 3

**Fig. 4**

**Fig.5a**

**Fig . 5b**

**Fig. 6**

Fig.7

**Fig. 8**